(19) Europäisches Patentamt / European Patent Office / Office européen des brevets

(11) **EP 2 884 406 A1**

(12) **EUROPEAN PATENT APPLICATION**
published in accordance with Art. 153(4) EPC

(43) Date of publication:
**17.06.2015 Bulletin 2015/25**

(51) Int Cl.:
**G06F 17/30** (2006.01)

(21) Application number: **13817158.2**

(22) Date of filing: **14.03.2013**

(86) International application number:
**PCT/CN2013/072593**

(87) International publication number:
**WO 2014/008766 (16.01.2014 Gazette 2014/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.07.2012 CN 201210240710**

(71) Applicant: **Beijing Changshengtiandi Ecommerce Co. Ltd.**
**Beijing 100026 (CN)**

(72) Inventor: **YAN, Yanchun**
**Beijing 100026 (CN)**

(74) Representative: **Riebling, Peter**
**Patentanwalt,**
**Rennerle 10**
**88131 Lindau (DE)**

(54) **SYSTEM AND METHOD FOR INFORMATION ANALYSIS IN NETWORK TRANSACTION**

(57) The present invention provides an information analysis system for network transactions, characterized in that the analysis system comprises: a product information database for storing product information; personal consumption space for publishing and residing subscription information of a user; an information publishing module for publishing the subscription information in the personal consumption space; an extracting module for extracting the subscription information from the personal consumption space; and a classifying, statistics making and analyzing module for classifying, making statistics on or analyzing the extracted subscription information, and then sending the classified, statistical or analyzed relevant information to a service end. The present invention also provides an information analysis method for network transaction. By means of the information analysis system and method for network transactions of the present invention, it is possible to make statistics on and classify subscription information of multiple users prior to sending to the service end, thereby guiding the service end in judging commodity production quantity.

Fig.1

EP 2 884 406 A1

**Description**

BACKGROUND

The present invention relates to technology implementing network transactions by using a network platform, and more specifically, to an information analysis system and method for network transactions.

In a traditional system or module implementing network transactions by using a network platform, usually a user retrieves desired commodity information by means of a tool such as the Internet, then forms a subscription order and adds the order to a shopping cart, and finally completes the network transaction by Alipay or bank payment. That is, the order is formed after the user carries out retrieval, and a commodity supplier only needs to process the user's order information.

In such a traditional network transaction mode, however, user and commodity supplier only have one-way contact while the user is implementing a network transaction. That is, the user does not provide the commodity supplier with necessary information on the commodity demand, and in turn, the commodity supplier cannot make anticipation and judgment as to the commodity production and reserve according to the user's demand information, thereby leading to a commodity shortage or glut.

SUMMARY

To eliminate the above drawbacks in the prior art, the present invention proposes an information analysis system for network transactions, characterized in that the analysis system comprises:

a product information database for storing product information;

personal consumption space for publishing and residing subscription information of a user;

an information publishing module for publishing the subscription information in the personal consumption space;

an extracting module for extracting the subscription information from the personal consumption space; and

a classifying, statistics making and analyzing module for classifying, making statistics on or analyzing the extracted subscription information, and then sending the classified, statistical or analyzed relevant information to a service end.

According to another preferred embodiment of the present invention, the information analysis system further comprises: a login module for receiving and verifying login data for the user to log in to the personal consumption space.

According to another preferred embodiment of the present invention, the service end in the information analysis system comprises: an information processing module for performing corresponding processing on the classified, statistical or analyzed information.

According to another preferred embodiment of the present invention, the information analysis system further comprises: an information editing module for editing the subscription information in the personal consumption space.

According to another preferred embodiment of the present invention, the information analysis system further comprises:

personal information storage space for storing personal information uploaded by the user;

wherein the verification of the login data can be verified by matching and verifying the login data with the personal information stored in the personal information storage space.

According to another preferred embodiment of the present invention, the information analysis system further comprises: a feedback module for feeding back to the personal consumption space product information in the product information database whose matching degree to the subscription information reaches a certain predefined threshold.

According to another preferred embodiment of the present invention, a method for the verification in the information analysis system comprises one or more of biological information recognition verification, information matching verification and identification recognition authentication.

According to another preferred embodiment of the present invention, the editing performed by the information editing module in the information analysis system comprises: modifying, forwarding or deleting the subscription information.

According to another preferred embodiment of the present invention, the relevant information in the information analysis system comprises: product quantity information and product demand analysis information.

According to another preferred embodiment of the present invention, the service end in the information analysis system comprises a service supplier, a social circle, a consumption network, a special business circle and a personal consumption circle.

According to another preferred embodiment of the present invention, the corresponding processing in the information analysis system comprises guiding the service end in product production.

According to another preferred embodiment of the present invention, the corresponding processing in the information analysis system comprises providing group purchasing information to a social circle or personal consumption circle.

According to another preferred embodiment of the present invention, the corresponding processing in the information analysis system comprises forming a special business circle according to relevant product information and providing the business circle information to a social circle or personal consumption circle.

According to another preferred embodiment of the present invention, the subscription information in the information analysis system is personal demand information, including one or more of: category, name, feature, brand, price, inventory, promotional information, retailer, product presentation picture or video, and product web page link of a to-be-purchased product.

According to another preferred embodiment of the present invention, the feedback information in the information analysis system includes one or more of the product's category, name, feature, brand, price, inventory, promotional information, retailer, product presentation picture or video and product web page link, and the product's historical deals or reviews.

According to another aspect of the present invention, the present invention further discloses an information analysis method for network transactions, the method being implemented on a network transaction platform, the network transaction platform being provided with a user's personal consumption space and having a product information database, characterized in that the method comprises:

an information publishing step of publishing and residing the user's subscription information in the personal consumption space;

an extracting step of extracting the subscription information from the personal consumption space; and

a classifying, statistics making and analyzing step of classifying, making statistics on or analyzing the extracted subscription information, and then sending the classified, statistical or analyzed relevant information to a service end.

According to another preferred embodiment of the present invention, the information analysis method further comprises: a login step of receiving and verifying login data for the user to log in to the personal consumption space.

According to another preferred embodiment of the present invention, the information analysis method further comprises: an information processing step of performing corresponding processing on the classified, statistical or analyzed information.

According to another preferred embodiment of the present invention, the information analysis method further comprises: an information editing step of editing the subscription information in the personal consumption space.

According to another preferred embodiment of the present invention, the information analysis method further comprises: a feedback step of feeding back to the personal consumption space product information in the product information database whose matching degree to the subscription information reaches a certain predefined threshold.

According to another preferred embodiment of the present invention, the relevant information in the information analysis method comprises: product quantity information and product demand analysis information.

According to another preferred embodiment of the present invention, the corresponding processing in the information analysis method comprises: a step of generating a product demand list to guide the service end in product production.

According to another preferred embodiment of the present invention, the corresponding processing in the information analysis method comprises: a step of providing group purchasing information to a social circle or personal consumption circle.

According to another preferred embodiment of the present invention, the corresponding processing in the information analysis method comprises: a step of forming a special business circle according to relevant product information and providing the business circle information to a social circle or personal consumption circle.

According to another preferred embodiment of the present invention, the subscription information in the information analysis method is personal demand information, including one or more of: category, name, feature, brand, price, inventory, promotional information, retailer, product presentation picture or video, and product web page link of a to-be-purchased product.

According to another preferred embodiment of the present invention, the feedback information in the information analysis method includes one or more of the product's category, name, feature, brand, price, inventory, promotional information, retailer, product presentation picture or video and product web page link, and the product's historical deals or reviews.

According to another preferred embodiment of the present invention, the login data can be verified in the information analysis method by matching and verifying the login data with the personal information stored in the personal information storage space.

According to another preferred embodiment of the present invention, a method for the verification in the information analysis method comprises one or more of: biological information recognition verification, information matching verification and identification recognition authentication.

According to another preferred embodiment of the present invention, the editing executed in the information editing step in the information analysis method comprises: modifying, forwarding or deleting the subscription information.

According to the information analysis system and method for network transactions of the present invention, it is possible to make statistics on and classify subscription information of multiple users prior to sending to the service end, thereby guiding the service end in judging commodity production quantity in advance. In the meanwhile, the service end can organize group purchasing according to the information.

BRIEF DESCRIPTION OF THE SEVERAL VIEWS OF THE DRAWINGS

Other features, objects and advantages of the present invention will become more apparent from the following detailed description of non-limiting embodiments, when taken in conjunction with the accompanying drawings, wherein the same or similar reference generally refers to the same or similar components.

Fig. 1 is a schematic modular structural view of an information analysis system for network transactions according to one preferred embodiment of the present invention;

Fig. 2 is a schematic modular structural view of an information analysis system for network transactions according to another preferred embodiment of the present invention;

Fig. 3 is a flowchart of an information processing method for network transactions according to one preferred embodiment of the present invention;

Fig. 4 is a flowchart of a flowchart of an information processing method for network transactions according to another preferred embodiment of the present invention;

Fig. 5 is a schematic view of an instance of processing the subscription information by the information processing module in an information analysis system for network transactions according to one preferred embodiment; and

Figs. 6 and 7 are instance diagrams of an information analysis system and method for network transactions according to one preferred embodiment of the present invention.

DETAILED DESCRIPTION

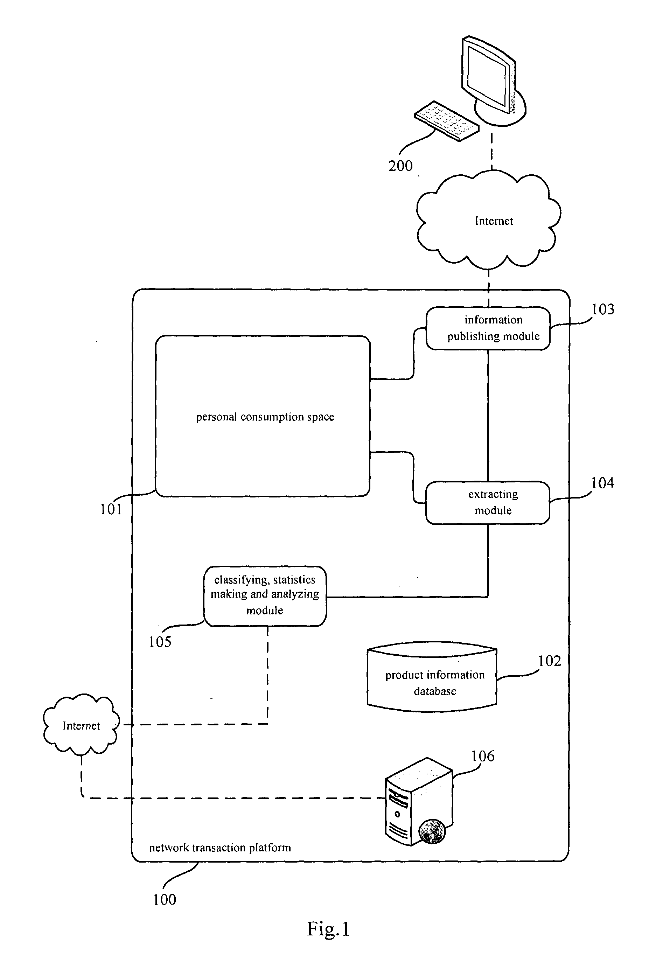

To better understand and set forth the present invention, further detailed description is presented below to the present invention with reference to Figs. 1-7.

Fig. 1 is a schematic modular structural view of an information analysis system for network transactions according to one preferred embodiment of the present invention. As shown in Fig. 1, a system 100 comprises:

a product information database 102 for storing product information;

personal consumption space 101 for publishing and residing subscription information of a user;

an information publishing module 103 for publishing the subscription information in the personal consumption space;

an extracting module 104 for extracting the subscription information from the personal consumption space; and

a classifying, statistics making and analyzing module 105 for classifying, making statistics on or analyzing the extracted subscription information, and then sending the classified, statistical or analyzed relevant information to a service end 106.

In particular, in this embodiment, analysis system 100 is implemented as a network transaction platform 100.

Typically, network transaction platform 100 is implemented as a B/S architecture or C/S architecture that can be easily used across platform, and preferably, is implemented as a B/S architecture. Various modules within network transaction platform 100 are designed and running based on the above architecture.

Product information database 102 that may be implemented using a well-known technique is used for storing product information that might comprise product-related attribute data and description data. Typically, product information database 102 is integrated in network transaction platform 100. In other embodiments, product information database 102 might be implemented as a distributed server system, server cluster or server logic matrix, which is formed by a plurality of network servers.

In this embodiment, personal consumption space 101 is integrated and resides on network transaction platform 100 (in this disclosure, the term "reside" refers to storing data and invoking data at any time). Subscription information is stored and resides in personal consumption space.

Information publishing module 103 publishes the subscription information and sends it to personal consumption space 101. As shown in Fig. 1, typically, the information publishing module provides for a terminal 200 an input interface for inputting detailed content of the subscription information. The input interface may be implemented as a browser running on terminal 200 or a computer data input interface on a client, and may receive a web page of inputted data for example. It should be pointed out that terminal 200 includes, without limitation, a personal computer terminal in this embodiment, a smartphone, a panel computer, a handheld intelligent terminal or other intelligent terminal.

More typically, the subscription information is personal demand information published by the user, which includes one or more of: category, name, feature, brand, price, inventory, promotional information, retailer, product presentation picture or video, and product web page link of a to-be-purchased product. Information publishing module 103 publishes in personal consumption space 101 one or more of the personal demand information in the form of a data table. Preferably, the user using the input interface of terminal 200 feeds back to information publishing module 103 input operation of checking or filling the personal demand information.

After the subscription information is stored and resides in personal consumption space 101, it may be set as private subscription information so that only an authorized user may invoke the private subscription information for view or modification; or the subscription information may be published to the public so that all or part of users on network transaction platform 100 may view the subscription information. In a preferred embodiment, the two methods may be used in conjunction.

Further, extracting module 104 is used for extracting the subscription information from personal consumption space 101 and sending the subscription information or subscription list information to classifying, statistics making and analyzing module 105. Then, classifying, statistics making and analyzing module 105 classifies, makes statistics on or analyzes the subscription information and sends the classified, statistical or analyzed relevant information to service end 106.

The classifying, making statistics on or analyzing the subscription information by classifying, statistics making and analyzing module 105 comprises classifying and making statistics according to content and type of the subscription information, wherein the subscription information is personal demand information, comprising: category, name, feature, brand, price, inventory, promotional information, retailer, product presentation picture or video, and product web page link of a to-be-purchased product. According to these items, classification and statistics may be made, for example, forming a price ranking table of commodities related to the subscription information according to price, or forming a brand demand ranking table or brand demand analysis table according to band. Afterwards, the generated list information or other information is sent to service end 106 where corresponding subsequent processing is performed according to the received list information on classification, statistics or analysis, wherein the analysis comprises traditional analysis modes or relevance analysis modes, and also may comprise other information processing means or modes.

Since the type and content of the subscription information are important for guiding a merchant to produce a concrete commodity, the analysis of the subscription information determines the actual commodity demand to a great extent. In the meanwhile, users also wish to purchase desired commodities in real time and hesitate to see commodity shortages. Therefore, the communication between users and merchants is of great importance. The information analysis system is proposed in view of this need.

In addition, in the personal consumption space there is further comprised an information storage module (not shown) for storing historical subscription information of a commodity or attribute information of a purchased commodity, such as commodity price and quantity of commodities being purchased. According to time periods or historical subscription information and the above other information such as commodity attribute information and by different standards such as year/month, classifying, statistics making and analyzing module 105 may extract relevant information from the information storage module for classification, statistics making or analysis, learns demand information of a relevant commodity in different respects, and generates and sends to service end 106 a classification, statistical or analysis list. Service end 106 performs subsequent corresponding processing according to the received classification, statistical or analysis list information.

Specifically, the relevant information comprises product quantity information and product demand analysis information. Service end 106 comprises: a service supplier, a social circle, a consumption network, a special business circle, a personal consumption circle, etc., or may be a single commodity supplier. The service end 106 performing subsequent corresponding processing according to the received relevant information comprises the following: according to the product quantity information, demand analysis information or product demand list information, service end 106 may make anticipation and judgment as to the production quantity of a user-desired commodity, thereby guiding the commodity production; service end 106 may also provide group purchasing information to social circles or personal consumption circles and build special business circles using the product quantity information and demand analysis information, thereby achieving more reasonable product production and supply; in the meanwhile, service end 106 may build special product supply business circles according to business circle information and provide corresponding business circle information to social circles or personal consumption circles.

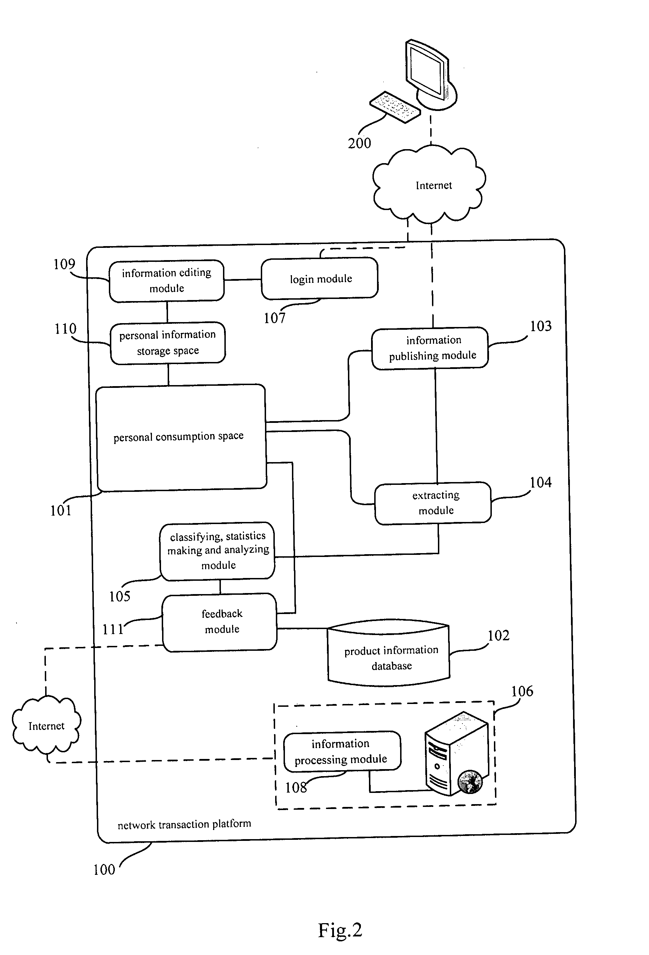

Further, refer to Fig. 2, which is a schematic modular structural view of an information analysis system for network transactions according to another preferred embodiment of the present invention and which essentially improves system 100 shown in Fig. 1 so as to meet more application demands. Various portions are now illustrated below, where the same modules as those in the schematic modular structural view of the information analysis system shown in Fig. 1 are not detailed here. In the another preferred embodiment shown in Fig. 2, the information analysis system may comprise: a login module 107, an information processing module 108, an information editing module 109, personal information storage space 110 and a feedback module 111.

Preferably, the information analysis system may comprise a login module 107 for receiving and verifying a user's login data for logging in to personal consumption space 101. Like other typical system of B/S architecture, information analysis system 100 may be implemented as a user management mode based on registered users. After a user is registered in system 100 for the first time, when later accessing system 100 by using terminal 200, the user first at least sends login data that comprises a username and login password to the login module for verifying the user's identity. Optionally, after a user is registered in system 100 for the first time, he/she at least uploads personal information, such as his/her username and password, so as to be used in later login verification. System 100 optionally comprises personal information storage space 110 for storing the personal information. Accordingly, the verification performed in login module 107 refers to matching and verifying the login data to personal information stored in the personal information storage space so as to confirm a user's identity and grant predefined usage right of system 100 accordingly. Of course, in view of different personal information, user login module 107 may automatically select an appropriate verification method, e.g., uploading one or more of biological information data, traditional username/password data and identification data. Accordingly, the verification method includes one or more of biological information recognition verification (e.g., fingerprint data verification), information matching verification (username/password check) and identification recognition authentication (e.g., peripheral key authentication of portable computers). In a preferred embodiment, login module 107 is designed with the capability of multiple data verification.

Preferably, in consideration of providing more personalized services to users, personal information storage space 110 may contain, for example, common online community function modules such as personal homepage, personal material, personal log, personal photo album/video, social map and circle. In a preferred embodiment, personal information storage space 110 and personal consumption space 101 may be integrated together and share data so as to facilitate management.

Preferably, information analysis system may further comprise information processing module 108, which is located on service end 106 and for performing corresponding processing on the classified, statistical or analyzed relevant information.

The relevant information comprises product quantity information and product demand analysis information, and also may comprise other information such as product demand list information. The corresponding processing comprises the following: according to the product quantity information, demand analysis information or product demand list information, service end 106 may make anticipation and judgment as to the production quantity of a user-desired commodity, thereby guiding the commodity production; service end 106 may provide group purchasing information to social circles or personal consumption circles and build special business circles using the product quantity information and demand analysis information, thereby achieving more reasonable product production and supply; in the meanwhile, service end 106 may build special product supply business circles according to business circle information and provide corresponding business circle information to social circles or personal consumption circles.

In addition, information processing module 108 may directly interact with an external or internal, separate processor (not shown). Thus, commodity information or other information such as freight source information which service end 106 wants to provide to the user is directly provided to the user by the processor, so that the user can obtain a more direct or visual rating or prediction of relevant information of the desired commodity and further, the convenience of communication and interaction between the user and service end 106 is improved greatly. For example, information processing module 108 may directly send through the processor to the user commodity quantity information or price information and relevant update information of which the user has interest, for the user to choose directly.

More preferably, the information analysis system may further comprise information editing module 109. The user desires the subscription information to be editable, so that actual needs of more application scenarios may be satisfied. Therefore, preferably in the present embodiment, system 100 further comprises information editing module 109 for editing the subscription information stored in personal consumption space 101. Specifically, the editing comprises: modifying, forwarding or deleting the subscription information. Further, information editing module 109 may be implemented as a management module of global information in system 100, which interactively communicate with other modules in system 100 so as to add, modify, delete and perform other editing on information data in various module, e.g. editing an order, publishing and deleting a personal photo, publishing and modifying a personal log.

More preferably, the information analysis system may further comprise feedback module 111. Feedback module 111 may interact data with product information database 102 and personal consumption space 101, for feeding back to personal consumption space 101 product information stored in product information database 102 whose matching degree to the subscription information reaches a certain predefined threshold. Specifically, in practical applications, since the data amount of the product information is relatively huge, the threshold is set for the purpose of selecting from the product information matching information that is pertinent to the subscription information, i.e. the matching information is a subset of the product information. The product information is electronic data for describing attributes of an actual product. Typically, the product information at least comprises: one or more of the product's category, name, feature, brand, price, inventory, promotional information, retailer, product presentation picture or video and product web page link, and the product's historical deals or reviews.

Preferably, the subscription information in the information analysis system is personal demand information, which includes one or more of: category, name, feature, brand, price, inventory, promotional information, retailer, product presentation picture or video, and product web page link of a to-be-purchased product. The feedback information in the information analysis system includes one or more of: the product's category, name, feature, brand, price, inventory, promotional information, retailer, product presentation picture or video, and product web page link. The information being fed back includes one or more of the product's category, name, feature, brand, price, inventory, promotional information, retailer, product presentation picture or video, and product web page link, and also may comprise other information associated with the product, e.g. product quality parameter information.

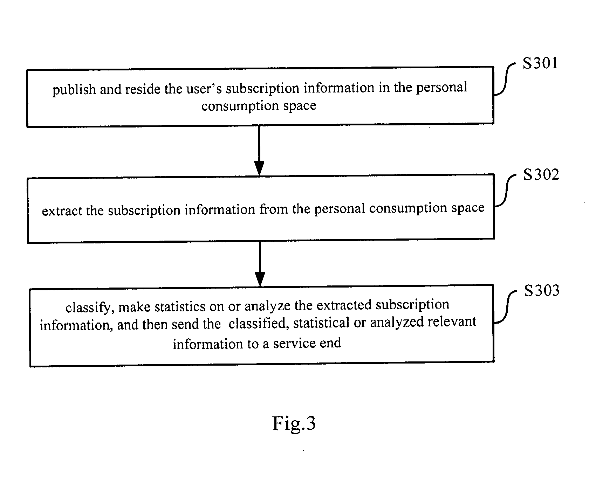

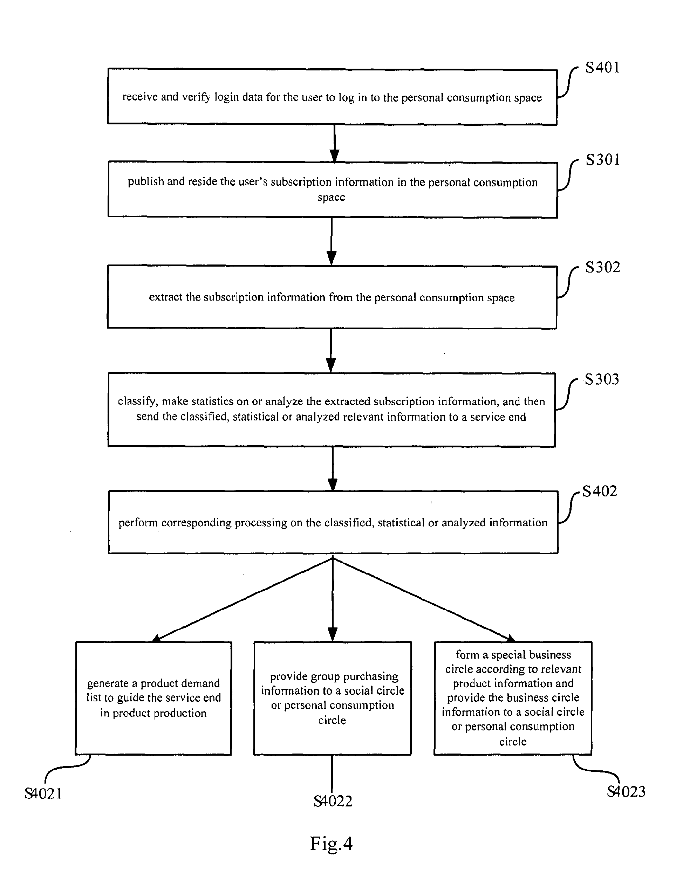

On the other hand, the method provided by the present invention is explained in conjunction with interpretations of relevant terms in the embodiments shown in Figs. 1 and 2. Refer to Figs. 3 and 4.

First refer to Fig. 3, which is a flowchart of an information processing method for network transactions according to one preferred embodiment of the present invention. Preferably, the method may be implemented in conjunction with the structure of analysis system 100 shown in Fig. 1 or 2. That is, in the information processing method for network transactions, the network transaction platform is provided with a user's personal consumption space and has a product information database. The method comprises:

an information publishing step S301 of publishing and residing in personal consumption space subscription information that is published by a user;

an extracting step S302 of extracting the subscription information from the personal consumption space; and

a classifying, statistics making and analyzing step 304 of classifying, making statistics on or analyzing the extracted subscription information, and then sending to a service end the classified, statistical or analyzed relevant information.

Concrete features of information publishing, extracting and classifying, statistics making and analyzing in the foregoing steps may refer to concrete descriptions of corresponding modules in Figs. 1 and 2 and thus are not detailed here.

Refer to Fig. 4, which is a flowchart of an information processing method for network transactions according to another embodiment of the present invention, wherein the same steps as those in the method shown in Fig. 3 are not detailed here. As shown in Fig. 4, the preferred embodiment comprises the following steps:

a login step 401 of receiving and verifying a user's login data for logging in to the personal consumption space, wherein this step may be executed prior to step S301;

an information processing step S402 of performing corresponding processing on the classified, statistical or analyzed relevant information, wherein this step is executed after step S303. Preferably, information processing step S402 may be executed according to three circumstances, i.e. the corresponding processing may be divided into step S4021, step S4022 and step S4023:

step S4021 of generating a product demand list to guide a service end in product production;

step S4022 of providing group purchasing information to social circles or personal consumption circles; and

step S4023 of forming special business circles according to product-related information and providing business circle information to social circles or personal consumption circles.

More preferably, the information analysis method further comprises an information editing step of editing the subscription information in the personal consumption space.

More preferably, the information analysis method further comprises a feedback step of feeding back to the personal consumption space product information in the product information database, whose matching degree to the subscription information reaches a certain threshold.

The foregoing information editing step and feedback step may be implemented before, after or concurrently with the above-mentioned other steps. Therefore, the execution order may be selected according to actual needs, which is not shown in Fig. 4 for simplicity.

With respect to various steps in the information analysis method, the implementation of a concrete step is the same as that of a corresponding module in the information analysis system, and thus details are omitted here.

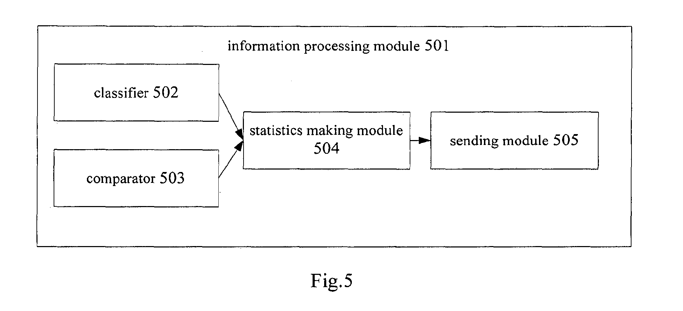

Fig. 5 is a schematic view of an instance of processing concrete subscription information by the information processing module in an information analysis system for network transactions according to one preferred embodiment of the present invention. As shown in Fig. 5, an information processing module 501 comprises: a classifier 502, a comparator 503 and a statistical processing module 504. Classifier 502 is for secondary classification of classified statistical information obtained from classifying, statistics making and analyzing module 105, the classification being determined based on a type of service end 106. For example, if service end 106 comprises an Adidas supplier and a Nike supplier (for illustration only; may comprise other brand suppliers), then information processing module 501 performs secondary classification on received classified statistical information such as commodity category lists and brand category lists according to service supplier type, so as to form commodity list information corresponding one by one to commodity suppliers on service end 106. Comparator 503 is for comparing commodity information such as price and type. The statistical processing module receives results processed by the classifier and comparator, forms relatively complete and refined commodity list information, and corresponds the commodity list information to service suppliers on service end 106. In addition, a sending module 505 is further comprised for sending to commodity suppliers the corresponding commodity information, such as commodity quantity demanded information.

Moreover, statistical processing module 504 further has a function of statistical calculation, i.e. can make a comparative and statistical calculation of demands of multiple users by receiving subscription information of these users from multiple personal consumption spaces. As shown in Fig. 4, information processing module 501 (the same module as information processing module 108 in Fig. 4) can be directly connected with extracting module 104 in personal consumption space 101. For example, information processing module 501 receives subscription information of 10000 customers from extracting module 104, makes a statistical calculation of these users' subscription information and comes to a conclusion that 2000 customers want to buy Adidas. Subsequently, further analysis may be made. For example, it is learned that 500 customers want Adidas winter coats, 500 customers want Adidas summer T-shirts, 500 customers want Adidas summer shorts. Then, according to the information type and content, service end 106 sends to the Adidas service supplier information reading "winter coat 500, summer T-shirt 500 and summer shorts 500," so that the service supplier can obtain a relatively visual knowledge of recent user demands and have a forecast about the production type and output of commodities. In this manner, a waste of resources is avoided, and production objectives become much clearer.

Of course, since classifying, statistics making and analyzing module 105 also has a function of classification and statistics, when the information sent to service end 106 is clear enough, information processing module 501 on service end 106 only needs to make a simple analysis, e.g. generating a report, whereby service end 106 obtains a visual knowledge and forecast of user demands.

In the meanwhile, as shown in Fig. 4, since the information storage module may also be connected with information processing module 501 (the same module as information processing module in Fig. 4), information processing module 501 can obtain from the information storage module historical subscription information or attribute information of purchased commodities, e.g. commodity price and quantity of purchased commodities. According to time periods or historical subscription information and the above other information such as commodity attribute information and by different standards such as year/month, statistical processing module 504 in information processing module 501 may extract relevant information from the information storage module for classification, statistics or analysis, learns demand information of a relevant commodity in different respects, and generates and sends a classification, statistical or analysis list to service end 106. According to the received classification, statistical or analysis list information, service end 106 performs subsequent processing, e.g. sending relevant commodity quantity, type and other information to different commodity service suppliers.

To better understand the present invention, presented below is an instance of an information analysis system and method for network transactions as claimed in the present invention, which is intended to deliver a better understanding of the claimed technical solution and gist of the present invention. The instance is described as below:

Firs of all, the present invention is described through the whole flow of a user using personal consumption space to implement a network transaction.

The user builds personal consumption space on a network transaction platform. A concrete implementation may, for example, set up MY STORE, wherein MY STORE has a goods subscribing structure. Optionally, in this embodiment, the goods subscribing structure is designed as one or more shelves arranged on the page. The shelf is a carrier for the user to publish subscription information and also a carrier for a processor to extract the subscription information. The shelf may be a fixed shelf or a self-defined shelf. Typically, the shelf bears shopping labels customized by one or more users. The shelf may display, for example, item displays of goods retrieved according to the shopping labels. Next, while the user is subscribing to goods, after he/she completes confirming the subscription, items related to the subscription information are placed on the shelf. Generally there are two kinds of subscribing methods:

subscribing by search, i.e., subscribing according to a search result, which may achieve batch subscribing;

direct subscribing, which may achieve one-to-one subscribing on the homepage of an object subscribed to.

Of course, other subscribing approaches may also be used. Depending on different resources of consumers, various subscribing approaches may be selected or combined.

Subscription objects usually include retailer, category, brand and item. Of course, other subscription objects may also be set, such as activity, price range, etc.

With respect to a user per se, goods being subscribed to mainly comes from retailers he/she has subscribed to, MY Store and his/her friends, such as relatives, family and friends in interest circles.

The whole subscription flow usually consists of the following 5 parts:

**1. subscribe to retailer**

According to a city where the user is located, the network transaction system first lists in default retailers connected with MY STORE, for the user to subscribe.

**2. subscribe to (category + brand)**

The subscribing may be implemented independently or in association.

A. After subscribing to a brand, the user may be reminded by the way to subscribe to several categories under this brand

B. After subscribing to a category, the user may be reminded by the way to subscribe to several brands within this category.

**3. subscribe to items**

By means of a filter provided by the system, an item list which the user wants to focus on, has interest in or intends to purchase is filtered out from catalogues recommended by retailers, MY STORE and friends, so that the user may subscribe to an item or a batch of goods.

The recommended catalogues contain the following explanations:

A. The recommended catalogues include:

$$\text{Recommended catalogues} = \text{retailers recommendations} + \text{MY STORE recommended catalogues} + \text{friends recommended catalogues}$$

B. Generation of the recommended catalogues

1) All retailers to which the user has subscribed generate recommended catalogues according to the category, brand and item to which the user has subscribed.

2) MY STORE generates recommended catalogues according to the category, brand and item to which the user has subscribed, most of which are Hot, top reviews and strongly promoted.

3) The user's friends proactively recommend catalogues at any place and any time.

With respect to the filter, a compound condition mainly includes retailer or friend, category, brand, price range, activity, etc is applied.

## 4. subscribe to the shelf

By means of the filter provided by the system, the user filters out the item list to which he/she wants to subscribe, thereby conducting single or batch subscribing. Each or each batch goods being subscribed to should be placed in a specified shelf so as to form a personalized store.

## 5. operation of the shelf

The shelf is a price comparator and also a goods review center. On the other hand, the shelf is the user's shopping information center. Every day MY STORE releases goods to which the user has subscribed in shelves in real time. Then, the user may focus on market trends and price changes of these goods; like a board in a stock exchange, review information and price information at different retailers of goods being subscribed to may be collected and displayed in real time. In the meanwhile, the shelf is the user's wish center and future demand center, and also is the user's history museum where the user's historical transaction information is stored.

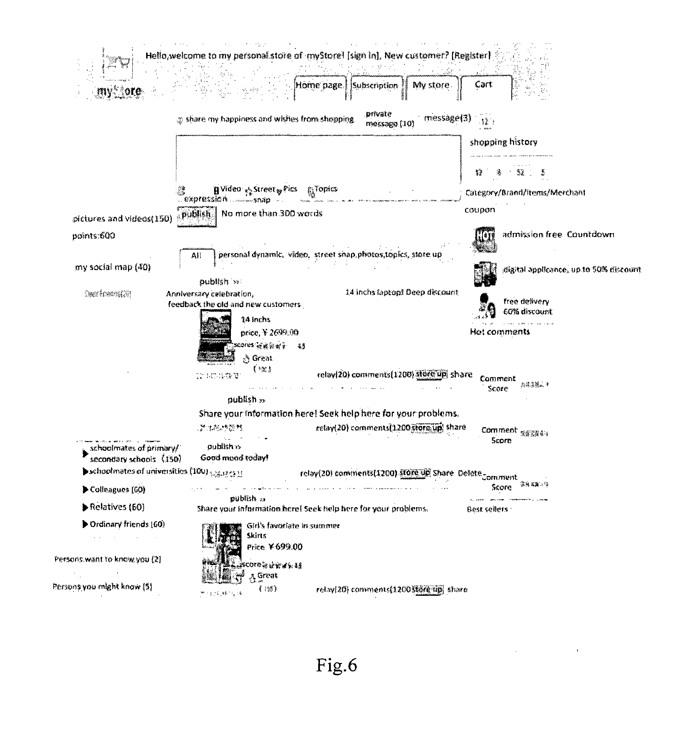

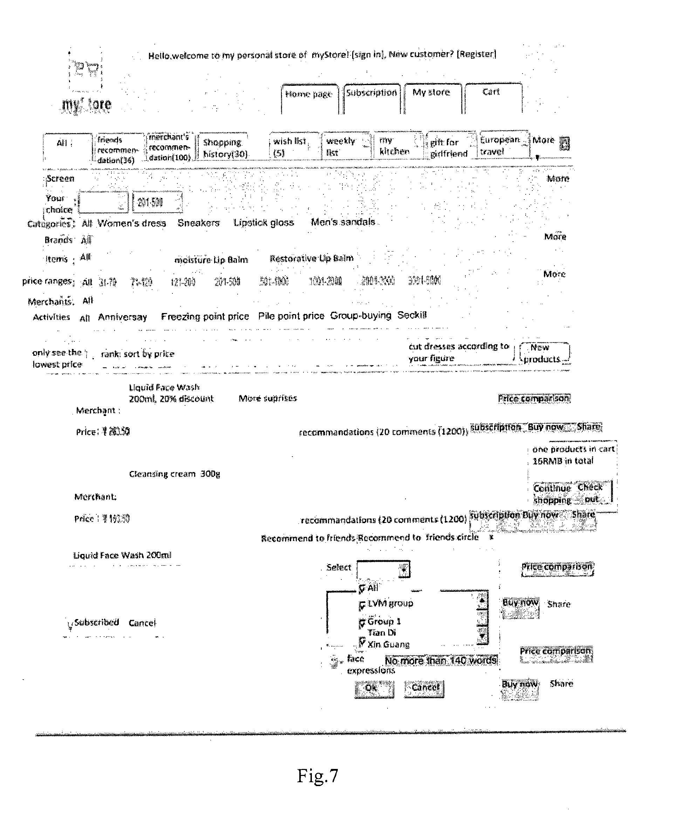

Next, an instance of an information analysis system and method for network transactions is described below with reference to Figs. 6 and 7.

First of all, the user logs into the home page of MY STORE via a network interface. As shown in Fig. 6, the system will inquire whether the user is a new user or not; if yes, the new user should be registered prior to login. After logging into MY STORE, the interface is as shown in Fig. 6. In this figure, there exists a "publish" button by which the user publish subscription information; additionally, there is my social map (40 persons as shown in Fig. 6), including middle and primary schoolmates, college schoolmates, colleagues, relatives, ordinary friends, and persons who seek the user's acquaintance and persons whom the user might know. Preferably, my social map may further include other modules, such as my friends, my social circles, etc. The information processing module on the service end of the information analysis system as recited in the present invention may provide group purchasing information to users within the social map. The information analysis system is implemented in the background and thus is not shown in this figure.

Fig. 7 shows an instance that social circles are included. As shown in Fig. 7, the user's social circles may be selected. For example, group LVM, group 1 and PlaceShinkong (name of the shopping mall) are included. Among them, group LVM represents friends, schoolmates etc. who has interest in brand LVM; users in group 1 may be defined, e.g. team friends; PlaceShinkong characterizes service supplier or merchant information, i.e. selecting goods suppliers. Apparently, the type and number of the user's social circles may be selected and set. Further, a recommending function is shown, i.e. information on goods of interest may be recommended to friends or social circles. The information processing module may also be set on the service end of the information analysis system as recited in the present invention, employ the same principle, and may provide group purchasing information to users within the social map. The information analysis system is implemented in the background and thus is not shown in this figure.

Figs. 6 and 7 show the whole transaction process on a network transaction platform, which is intended to help understand the contribution which the information analysis system and method of the present invention make to the whole network transaction and their functions, i.e. intended to better understand the entire technical solution of the present invention.

Usually a conventional method is employed for classification, statistics and demand analysis. For example, a method of modeling or data relevance analyzing is employed for project and software demand analysis. Therefore, with respect to the processing executed by the statistics making and analyzing module and the information processing module, an instance may be described as below:

User A places an order for 2 pairs of Adidas soccer shoes, so we can consider that the user has interest in athletic shoes of Adidas. When user A submits again a wish to purchase soccer shoes, the classifying, statistics making and analyzing module of the present invention sends to an Adidas supplier the brand's soccer shoes demand information. When the amount of users who has interest in the same style of soccer shoes of Adidas amounts to a certain value, e.g. 10000 pairs, then the information processing module makes statistics on information such as size of shoes, 1000 pairs for each of sizes 38 to 47 among the 10000 pairs, and sends the information to the service end, i.e. Adidas brand supplier. After the supplier receives the data, the supplier may formulate a product plan for this style of Adidas soccer shoes in the next 1 year (suppose the service cycle of soccer shoes is 1 year), i.e. producing 1000 pairs of soccer shoes for each of sizes 38 to 47. In this manner, a waste of resources is avoided, and a better supply-demand balance may be achieved.

What has been illustrated above is only an instance, various analysis can be conducted during the practical information analysis so as to provide information with more evaluation to the service end and in turn guide the product production of retailer on the service end better.

It should be pointed out that in more embodiments, other types of page function modules may be designed to present and manage subscription information published by users and commodity list information resulting from the subscription information, without limitation to the shelf as shown in this embodiment.

As the exemplary embodiments and their advantages have been illustrated in detail, it should be understood that various changes, replacements and modifications may be made to these embodiments without departing from the spirit of the present invention and the protection scope defined by the appended claims. For other examples, those of ordinary skill in the art should understand that the order of process steps may differ while be maintained within the protection scope of the present invention.

The information analysis method for network transactions as provided by the present invention may be implemented using programmable logic devices or implemented as computer program software. For example, the embodiments according to the present invention may be a computer program product, which is run to cause the computer to execute the method disclosed herein. The computer program product comprises a computer readable storage medium that contains computer program logic or code portion for implementing various steps of the information processing method for a network transaction platform. The computer readable storage medium may be a built-in medium installed within the computer or a removable medium (e.g., a hot plug technique storage device) detachable from the computer body. The built-in medium includes, without limitation, a rewritable non-volatile memory, e.g., RAM, ROM, a flash memory and a hard disk. The removable medium includes, without limitation, optical storage media (e.g., CD-ROM and DVD), magneto-optical storage media (e.g., MO), magnetic storage media (e.g., tapes or removable hard disks), media with a built-in rewritable non-volatile memory (e.g., storage cards), and media with built-in ROM (e.g., ROM boxes).

Those skilled in the art may appreciate that any computer system with appropriate programming means can execute various steps of the method of the present invention which is embodied in a program product. Although most embodiments described in this specification focus on software programs, substitute embodiments that implement the method provided by the present invention as firmware and hardware also fall within the protection scope of the present invention.

It is apparent to those skilled in the art that the present invention is not limited to details of the above illustrative embodiments, and they may implement the present invention in other forms without departing from the spirit or basic features of the present invention. Therefore, nevertheless, the embodiments should be regarded as illustrative rather than limiting. The scope of the present invention is not defined by the above illustration but by the appended claims. Therefore, it is intended to embrace in the present invention all alterations that fall within the meaning and scope of equivalent elements of the claims. Any reference numeral in the claims should not be construed as limiting a claim involved. In addition, the word "comprise/comprising" does not exclude other components, unit or steps, and the singular does not exclude the plural. A plurality of components, units or means as recited in claims may also be implemented as one component, unit or means by software or hardware.

The information processing system and method for a network transaction platform as disclosed in the present invention has such advantages that users operate conveniently and rapidly and that service providers provide feedback in time and accurately.

What has been disclosed above is merely some better embodiments of the present invention. The claim scope of the present invention should not be defined hereby. Equivalent changes made according to the claims of the present invention still belong to the scope of the present invention.

**Claims**

1. An information analysis system for network transactions, **characterized in that** the analysis system comprises:

   a product information database for storing product information;
   personal consumption space for publishing and residing subscription information of a user;
   an information publishing module for publishing the subscription information in the personal consumption space;
   an extracting module for extracting the subscription information from the personal consumption space; and
   a classifying, statistics making and analyzing module for classifying, making statistics on or analyzing the extracted subscription information, and then sending the classified, statistical or analyzed relevant information to a service end.

2. The information analysis system according to Claim 1, wherein the system further comprises:

   a login module for receiving and verifying login data for the user to log in to the personal consumption space.

3. The information analysis system according to Claim 1, wherein the service end comprises:

   an information processing module for performing corresponding processing on the classified, statistical or analyzed information.

4. The information analysis system according to Claim 1, wherein the system further comprises:

an information editing module for editing the subscription information in the personal consumption space.

5. The information analysis system according to Claim 2, wherein the system further comprises:

personal information storage space for storing personal information uploaded by the user;
wherein the login data can be verified by matching and verifying the login data with the personal information stored in the personal information storage space.

6. The information analysis system according to Claim 1, wherein the system further comprises:

a feedback module for feeding back to the personal consumption space product information in the product information database whose matching degree to the subscription information reaches a certain predefined threshold.

7. The information analysis system according to Claim 2, wherein the verification of the login data can be implemented via one or more of biological information recognition verification, information matching verification and identification recognition authentication.

8. The information analysis system according to any one of Claim 4, wherein the editing performed by the information editing module comprises: modifying, forwarding or deleting the subscription information.

9. The information analysis system according to Claim 1, wherein the relevant information comprises: product quantity information and product demand analysis information.

10. The information analysis system according to Claim 1, wherein the service end comprises a service supplier, a social circle, a consumption network, a special business circle and a personal consumption circle.

11. The information analysis system according to Claim 3, wherein the corresponding processing comprises generating a product demand list to guide the service end in product production.

12. The information analysis system according to Claim 3, wherein the corresponding processing comprises providing group purchasing information to a social circle or personal consumption circle.

13. The information analysis system according to Claim 3, wherein the corresponding processing comprises forming a special business circle according to relevant product information and providing the business circle information to a social circle or personal consumption circle.

14. The information analysis system according to Claim 1, wherein the subscription information is personal demand information, including one or more of: category, name, feature, brand, price, inventory, promotional information, retailer, product presentation picture or video, and product web page link of a to-be-purchased product.

15. The information analysis system according to Claim 6, wherein the feedback information includes one or more of the product's category, name, feature, brand, price, inventory, promotional information, retailer, product presentation picture or video and product web page link, and the product's historical deals or reviews.

16. An information analysis method for network transactions, the method being implemented on a network transaction platform, the network transaction platform being provided with a user's personal consumption space and having a product information database, **characterized in that** the method comprises:

an information publishing step of publishing and residing the user's subscription information in the personal consumption space;
an extracting step of extracting the subscription information from the personal consumption space; and
a classifying, statistics making and analyzing step of classifying, making statistics on or analyzing the extracted subscription information, and then sending the classified, statistical or analyzed relevant information to a service end.

17. The information analysis method according to Claim 16, further comprising: a login step of receiving and verifying login data for the user to log in to the personal consumption space.

18. The information analysis method according to Claim 16, further comprising: an information processing step of performing corresponding processing on the classified, statistical or analyzed information.

19. The information analysis method according to Claim 16, further comprising: an information editing step of editing the subscription information in the personal consumption space.

20. The information analysis method according to Claim 16, further comprising: a feedback step of feeding back to the personal consumption space product information in the product information database whose matching degree to the subscription information reaches a certain predefined threshold.

21. The information analysis method according to Claim 18, wherein the corresponding processing comprises: a step of generating a product demand list to guide the service end in product production.

22. The information analysis method according to Claim 18, wherein the corresponding processing comprises: a step of providing group purchasing information to a social circle or personal consumption circle.

23. The information analysis method according to Claim 18, wherein the corresponding processing comprises: a step of forming a special business circle according to relevant product information and providing the business circle information to a social circle or personal consumption circle.

24. The information analysis method according to Claim 17, wherein the login data can be verified by matching and verifying the login data with the personal information stored in the personal information storage space.

25. The information analysis method according to Claim 17, wherein the verification of the login data can be implemented via one or more of: biological information recognition verification, information matching verification and identification recognition authentication.

26. The information analysis method according to Claim 19, wherein the editing executed in the information editing step comprises: modifying, forwarding or deleting the subscription information.

27. The information analysis method according to Claim 16, wherein the relevant information comprises: product quantity information and product demand analysis information.

28. The information analysis method according to Claim 16, wherein the subscription information is personal demand information, including one or more of: category, name, feature, brand, price, inventory, promotional information, retailer, product presentation picture or video, and product web page link of a to-be-purchased product.

29. The information analysis method according to Claim 20, wherein the feedback product information comprises one or more of: the product's category, name, feature, brand, price, inventory, promotional information, retailer, product presentation picture or video and product web page link, and the product's historical deals or reviews.

200

Internet

information
publishing module — 103

personal consumption space

extracting
module — 104

101

classifying, statistics
making and analyzing
module

105

product information
database — 102

Internet

106

network transaction platform

100

Fig.1

Fig.2

publish and reside the user's subscription information in the personal
consumption space
$\int$ S301

extract the subscription information from the personal consumption space
$\int$ S302

classify, make statistics on or analyze the extracted subscription
information, and then send the classified, statistical or analyzed relevant
information to a service end
$\int$ S303

Fig.3

receive and verify login data for the user to log in to the personal consumption space — S401

publish and reside the user's subscription information in the personal consumption space — S301

extract the subscription information from the personal consumption space — S302

classify, make statistics on or analyze the extracted subscription information, and then send the classified, statistical or analyzed relevant information to a service end — S303

perform corresponding processing on the classified, statistical or analyzed information — S402

generate a product demand list to guide the service end in product production

provide group purchasing information to a social circle or personal consumption circle

form a special business circle according to relevant product information and provide the business circle information to a social circle or personal consumption circle

S4021

S4022

S4023

Fig.4

information processing module 501

classifier 502

comparator 503

statistics making module 504

sending module 505

Fig.5

Fig.6

Hello,welcome to my personal store of myStore! [sign in], New customer? [Register]

my Store

| Home page | Subscription | My store | Cart |

| All | friends recommen- dation(36) | merchant's recommen- dation(100) | Shopping history(30) | wish list (5) | weekly list | my kitchen | gift for girlfriend | European travel | More |

Screen                                                                                       More

Your choice [ ] 201-500

Categories: All  Women's dress  Sneakers  Lipstick gloss  Men's sandals

Brands  All                                                                                  More

Items  All              moisture Lip Balm       Restorative Lip Balm

price ranges: All  31-70  71-120  121-200  201-500  501-1000  1001-2000  2001-3000  3001-5000     More

Merchants:  All

Activities  All  Anniversary  Freezing point price  Pile point price  Group-buying  Seckill

only see the lowest price     rank: sort by price          cut dresses according to your figure   New products

Liquid Face Wash
200ml, 20% discount     More suprises                                          Price comparison
Merchant :

Price: ￥28.50                            recommandations (20 comments (1200)) subscription  Buy now  Share

                                                                              one products in cart
                                                                              16RMB in total

Cleansing cream  300g

Merchant:                                                                     Continue  Check
                                                                             shopping  out
Price : ￥16.50                          recommandations (20 comments (1200) subscription Buy now  Share

                            Recommend to friends;Recommend to  friends circle   x

Liquid Face Wash 200ml

                                        Select [        ]                      Price comparison

                                        ☑ All
                                        ☑ LVM group                            Buy now  Share
                                        ☑ Group 1
                                          Tian Di
                                        ☑ Xin Guang
Subscribed  Cancel                                                            Price comparison
                                        face      No more than 140 words
                                        expressions
                                        [ Ok ]  [ Cancel ]                     Buy now  Share

Fig.7

# INTERNATIONAL SEARCH REPORT

| International application No. |
| --- |
| PCT/CN2013/072593 |

## A. CLASSIFICATION OF SUBJECT MATTER

G06F 17/30 (2006.01) i

According to International Patent Classification (IPC) or to both national classification and IPC

## B. FIELDS SEARCHED

Minimum documentation searched (classification system followed by classification symbols)

IPC: G06F; G06Q

Documentation searched other than minimum documentation to the extent that such documents are included in the fields searched

Electronic data base consulted during the international search (name of data base and, where practicable, search terms used)

CNPAT, CNKI, WPI, EPODOC, GOOGLE: network transaction, shopping online, information analysis, net+, deal+, trade, info+, analy+, product?, data, consume, subscribe, issue, sort, statistic

## C. DOCUMENTS CONSIDERED TO BE RELEVANT

| Category* | Citation of document, with indication, where appropriate, of the relevant passages | Relevant to claim No. |
| --- | --- | --- |
| X | CN 1414506 A (WANG, Chenghui), 30 April 2003 (30.04.2003), description, page 7, line 16 to page 12, line 9 | 1-29 |
| A | CN 1313567 A (ZHANG, Hong et al.), 19 September 2001 (19.09.2001), the whole document | 1-29 |
| A | CN 102073737 A (SOUTHEAST UNIVERSITY), 25 May 2011 (25.05.2011), the whole document | 1-29 |
| A | WO 2012/016300 A1 (OGILVY, I.C.), 09 February 2012 (09.02.2012), the whole document | 1-29 |

☐ Further documents are listed in the continuation of Box C.     ☒ See patent family annex.

| | |
| --- | --- |
| *    Special categories of cited documents:<br><br>"A"   document defining the general state of the art which is not considered to be of particular relevance<br><br>"E"   earlier application or patent but published on or after the international filing date<br><br>"L"   document which may throw doubts on priority claim(s) or which is cited to establish the publication date of another citation or other special reason (as specified)<br><br>"O"   document referring to an oral disclosure, use, exhibition or other means<br><br>"P"   document published prior to the international filing date but later than the priority date claimed | "T"   later document published after the international filing date or priority date and not in conflict with the application but cited to understand the principle or theory underlying the invention<br><br>"X"   document of particular relevance; the claimed invention cannot be considered novel or cannot be considered to involve an inventive step when the document is taken alone<br><br>"Y"   document of particular relevance; the claimed invention cannot be considered to involve an inventive step when the document is combined with one or more other such documents, such combination being obvious to a person skilled in the art<br><br>"&"   document member of the same patent family |
| Date of the actual completion of the international search<br><br>        15 April 2013 (15.04.2013) | Date of mailing of the international search report<br><br>       **06 June 2013 (06.06.2013)** |
| Name and mailing address of the ISA/CN:<br> State Intellectual Property Office of the P. R. China<br> No. 6, Xitucheng Road, Jimenqiao<br> Haidian District, Beijing 100088, China<br> Facsimile No.: (86-10) 62019451 | Authorized officer<br><br>        **YANG, Ying**<br><br>Telephone No.: (86-10) **62413310** |

Form PCT/ISA/210 (second sheet) (July 2009)

## INTERNATIONAL SEARCH REPORT
### Information on patent family members

| International application No. |
| --- |
| **PCT/CN2013/072593** |

| Patent Documents referred in the Report | Publication Date | Patent Family | Publication Date |
| --- | --- | --- | --- |
| CN 1414506 A | 30.04.2003 | None | |
| CN 1313567 A | 19.09.2001 | None | |
| CN 102073737 A | 25.05.2011 | None | |
| WO 2012/016300 A1 | 09.02.2012 | AU 2011286178 A1 | 21.03.2013 |

Form PCT/ISA/210 (patent family annex) (July 2009)